# EUROPÄISCHE PATENTSCHRIFT

(11) **EP 0 812 233 B1**
(45) Veröffentlichungstag und Bekanntmachung des Hinweises auf die Patenterteilung: **30.09.1998**
(21) Anmeldenummer: 96907333.7
(22) Anmeldetag: 01.03.1996
(51) Int. Cl.: B01D 5/00, B01D 3/42, B01D 3/06, B01D 1/30, D06L 1/10, D06F 43/08

(54) **VERFAHREN UND VORRICHTUNG ZUR WIEDERAUFBEREITUNG EINES VERUNREINIGTEN LÖSEMITTELS**
PROCESS AND DEVICE FOR REGENERATING A CONTAMINATED SOLVENT
PROCEDE ET DISPOSITIF DE REGENERATION D'UN SOLVANT CONTAMINE

(30) Priorität: 01.03.1995 DE 19507126; 18.05.1995 DE 19518346; 13.10.1995 DE 19538214
(43) Veröffentlichungstag der Anmeldung: 17.12.1997
(73) Patentinhaber: Baumann, Didda Maria Janina, 97076 Würzburg/Lengfeld (DE)
(72) Erfinder: BAUMANN, Walter, D-99819 Eisenach (DE)
(74) Vertreter: Beil, Hans Christoph, Dr.
(86) Internationale Anmeldenummer: EP9600859
(87) Internationale Veröffentlichungsnummer: WO9626780

(56) Entgegenhaltungen:
- EP-A- 0 021 021
- EP-A- 0 236 813
- EP-A- 0 284 341
- WO-A-93/24198
- US-A- 2 881 116

## Beschreibung

Die vorliegende Erfindung betrifft ein Verfahren und eine Vorrichtung zur Wiederaufbereitung eines verunreinigten Lösemitttels unter Abtrennung verunreinigender Fremdstoffe.

Die Reinigung zum Beispiel wasserempfindlicher Textilien erfolgt mit organischen Lösemitteln.

Da das Lösemittel die auf Bekleidung häufig vorkommenden wasserlöslichen Schmutzstoffe ohne Hilfsmittel nicht ablösen kann, werden bei der Textilreinigung neben einem Lösevermittler, der für die Bildung einer Wasser-Lösemittelemulsion sorgt, gegebenenfalls gewisse Mengen Wasser zugesetzt.

Das Lösemittel wird in der Maschine im Kreislauf geführt und nach jeder Charge regeneriert. Bei diesem Regenerierprozeß müssen alle aus der Ware aufgenommenen Fremdstoffe sowie Wasser und Textilhilfsmittel aus dem Lösemittel sicher und möglichst vollständig wieder entfernt werden. Das regenerierte Lösemittel wird dem Reinigungsprozeß wieder zugeführt.

Als Lösemittel wurden bisher im wesentlichen leichtsiedende Halogenkohlenwasserstoffe eingesetzt. Wegen des niedrigen Siedepunktes ist hier eine destillative Wiederaufbereitung des verschmutzten Lösemittels verhältnismäßig einfach. Der überwiegende Anteil der Fremdstoffe siedet bei höheren Temperaturen als das Lösemittel und kann in einer einfachen Blasendestillation nach dem Verdampfen des Lösemittels als Destillationsrückstand abgetrennt und entsorgt werden. Das Wasser mit einem Siedepunkt, der niedriger als der des heute üblicherweise verwendeten Tetrachlorethen (Siedepunkt 121°C) liegt, wird zwar mit überdestilliert, trennt sich aber durch Schwerkraft vom Destillat ab.

Da die Halogen-Kohlenwasserstoffe biologisch nicht abbaubar sind, wird aus Gründen des Umweltschutzes zunehmend auf Paraffinkohlenwasserstoffe als Lösemittel umgestellt. Diese Stoffe werden sowohl im Boden als auch in der Atmosphäre in wenigen Tagen durch natürliche Vorgänge abgebaut. Da diese Kohlenwasserstoffe brennbar sind, wird aus Sicherheitsgründen eine Produktgruppe verwendet, deren Siedepunkt zwischen etwa 180°C und 200°C liegt. Diese Produkte haben gute Reinigungseigensehaften und können auch außerhalb der Maschine gefahrlos gehandhabt werden.

Wegen des hohen Siedepunktes muß im Vakuum, d.h bei ca. 50 mbar bis 100 mbar destilliert werden, weil die in das Lösemittel gelangenden Fremdstoffe bei der Siedetemperatur des Lösemittels bei Atmosphärendruck zersetzt würden.

Für die Vakuumdestillation werden im allgemeinen heute einstufige Blasendestillationen verwendet, deren Verfahrensführung im übrigen der bei leichtsiedenden Halogenkohlenwasserstoffen entspricht.

Die praktische Anwendung zeigte bald, daß wegen des hohen Siedepunktes der heute eingesetzten Kohlenwasserstoff-Lösemittel zahlreiche Fremdstoffe im Siedebereich zwischen 130°C und etwa 190°C beim Destillieren mitverdampfen und damit ins Destillat übergeführt werden. Diese Fremdstoffe enthalten unangenehm riechende Substanzen, die bei der mehrmaligen Destillation systematisch im Lösemittel angereichert werden. Da zu den somit übergebliebenen Stoffen auch Stoffe gehören, die eine Emulsionsbildung zwischen Lösemittel und Wasser bewirken, trennt sich das Wasser durch Absetzen aus dem Destillat nicht vollständig ab.

Das emulgierte Wasser hält zudem gewisse Mengen organischer Verbindungen in Lösung, die damit zusätzlich an der Anreicherung von Geruchsstoffen beteiligt sind.

Somit ergibt sich die Notwendigkeit, beim Einsatz höhersiedender Lösemittel nicht nur hochsiedende Fremdstoffe abzutrennen, sondern auch Fremdstoffe, deren Siedepunkt niedriger als der des Lösemittels liegt. Die praktische Erfahrung zeigt, daß bei Wiederaufbereitung hochsiedender Lösemittel durch einfache Blasendestillation im Vakuum Geruchsstoffe angereichert werden.

Für eine befriedigende Abtrennung dieser sehr störenden Fremdstoffe ist es erschwerend, daß bereits ein sehr geringer Anteil dieser Fremdstoffe im Lösemittel einen recht störenden Geruch bewirkt. Der Anteil dieser Fremdstoffe liegt mengenmäßig im Bereich der Promille und darunter.

Durch die gegenseitige Siedepunktsbeeinflussung ist eine befriedigende Abtrennung aus der Verdampfung heraus zusätzlich erschwert.

Die hohe Trennschärfe, die notwendig wäre, um die genannten sehr geringen Mengenanteile an Fremdstoffen befriedigend abzutrennen, ist in einer Textilreinigungsmaschine mit den derzeit vorhandenen Verfahren nicht realisierbar.

In der Großchemie wird eine hohe Trennschärfe aus der Verdampfung durch eine Nachschaltung zahlreicher Böden, die möglicherweise noch mit einem hohen Rücklaufverhältnis an Destillat betrieben werden, erreicht.

In einer Textilreinigungsmaschine, die in einem normalen Arbeitsraum untergebracht werden muß, ist eine solche Technik sowohl wegen ihres Platzbedarfes als auch wegen der Höhe der Investition nicht realisierbar.

Andererseits müssen die, wenn auch in sehr geringen Mengen enthaltenen und sich systematisch anreichernden, Fremdstoffe aus dem Lösemittel entfernt werden, weil sich ein Textilreinigungsverfahren, bei dem unangenehm riechende Fremdstoffe auf die Ware übertragen werden, selbst verbietet

Aus dem Stand der Technik gemäß der DE 42 18 451 A1 ist eine fraktionierte Vakuumdestillation bekannt. Das Verfahren, das im wesentlichen auf die Rückgewinnung der Verdampfungenthalpie gerichtet ist, ist für die Praxis zu kompliziert, außerdem ist der verwendete Entspannungsverdampfer für die Bedingungen der Textilreinigung nur schlecht geeignet. Der entscheidende Nachteil ist jedoch, daß eine Einstellung der Trenn-Parameter, wie z. B. die Austrittstemperaturen des kondensierten Lösemittels und der dampfförmigen Fremdstoffe aus dem Kondensator nicht unabhänging voneinander einstellbar sind. Damit ist eine ausreichende Trennschärfe bei geringem oder auch variierendem Fremdstoffgehalt nicht erreichbar.

Somit ist die Aufgabe der vorliegenden Erfindung, ein Verfahren und eine Vorrichtung zur Wiederaufbereitung eines verunreinigten Lösemittels unter Abtrennung verunreinigender Fremdstoffe zu liefern, die auch bei geringen oder variierenden Mengen an Fremdstoffen eine Abtrennung dieser Fremdstoffe mit hoher Trennschärfe erlauben.

Diese Aufgabe wird durch ein Verfahren gemäß dem beigefügten Anspruch 1 und eine Vorrichtung gemäß dem beigefügten Anspruch 19 gelöst.

Vorteilhafte Weiterbildungen der vorliegenden Erfindung sind in den Unteransprüchen 2 bis 18 bzw. 20 bis 38 angegeben.

Das Verfahren und die Vorrichtung gemäß der vorliegenden Erfindung sind für die Aufbereitung von verschmutzten Lösemitteln in der Textilreinigung besonders geeignet. Sie sind jedoch generell bei Anwendungen vorteilhaft anwendbar, bei denen ein mengenmäßig überwiegendes Hauptprodukt von höher- und tiefersiedenden Nebenprodukten befreit werden soll.

Zur Wiederaufbereitung des verschmutzten Lösemittels wurden ein Verfahren und eine Vorrichtung entwickelt, durch die Fremdstoffe in befriedigender Weise abgetrennt werden können. Um die Probleme der Siedepunktserhöhung der leichtersiedenden Fremdstoffe wegen deren sehr geringen Mol-Anteile auszuschalten, wird die Abtrennung dieser Fremdstoffe aus der Gasphase durch fraktionierte Kondensation erreicht.

Bei der Verwendung der im nachfolgenden beschriebenen Vorrichtungen für die Verdampfung und die anschließende Rekondensation des Lösemittels beim Destillationsprozeß zeigt sich, daß trotz der Anwesenheit von emulsionsbildenden Stoffen im eingesetzten verschmutzten Lösemittel, nach der Destillation ein völlig wasserfreies Destillat gewonnen wird. Damit ist die befriedigende Abtrennung aller leichtersiedenden und geruchstragenden Stoffe erreicht.

Durch die Verfahrensführung und die Gestaltung der Vorrichtungen werden bei der fraktionierten Kondensation der aus dem Verdampfer austretenden Dämpfe reines Lösemittel und Leichtsieder mit hoher Trennschärfe voneinander getrennt. Die für die hohe Trennschärfe erforderliche präzise Temperaturführung wird erfindugsgemäß mit einem verhältnismäßig geringem Aufwand an Regeltechnik erreicht. Eine hohe Trennschärfe wird dabei durch eine unabhängige, stabile und genaue Regelung der Temperaturen sowohl am Austritt des flüssigen Kondensates (reines Lösemittel) als auch am Austritt der dampfförmigen Leichtsieder erreicht. Die Temperaturregelung erfolgt durch einen separaten geschlossenen Kühlkreislauf des Kondensationssystems mit Regelung der Kühlmitteltemperatur durch Thermostat und Umlaufgeschwindigkeit.

Ein wesentlicher Vorteil des hier beschriebenen Verfahrens ist es, daß die Destillation kontinuierlich mit einem kleinen Stoffinventar in der Apparatur durchgeführt werden kann. Durch die besondere Gestaltung des Vorlagebehälters und des Verdampfers kann das Überkochen in der Destillierblase sicher vermieden werden. Dieses Überkochen ist beim Destiltieren von Lösemitteln aus der Textilreinigung bisher ein häufig vorkommender und unangenehmer Vorgang, weil auch die Teile der Apparatur, die im Normalfall nur reines Destillat führen, verschmutzt werden.

In der nachstehend näher beschriebenen Verdampfungseinrichtung werden die Leichtsieder größtenteils bereits im Dampfraum des Verdampfers verdampft, ohne das Bad der siedenden Flüssigkeit zu erreichen. Auch die kleine Flüssigkeitsmenge und der damit geringe Energieinhalt des siedenden Bades tragen wesentlich zur Vermeidung des Überkochens bei.

Die Aufenthaltsdauer des verschmutzten Lösemittels im Verdampfer beträgt nur wenige Minuten. Dadurch wird die thermische Zersetzung von Fremdstoffen im Lösemittel vermieden und damit auch die Neubildung geruchtragender Spaltprodukte.Die Ausbreitung von Mikroben im Destillat ist sicher vermieden, weil das Destillat bei diesem Verfahren, wasserfrei ist; keimtötende Zusätze sind nicht erforderlich.

Ein weiterer Vorteil des beschriebenen Verfahrens und der beschriebenen Vorrichtung ist es, daß die bei der Destillation als Rückstand zurückbleibenden hochsiedenden Fremdstoffe über die Steuerung der Anlage chargenweise vollautomatisch ausgeschleust werden können, wobei sich der Prozeß der vorher nicht bekannten und auch stets schwankenden Menge an solchen Reststoffen selbständig anpaßt. Der Destillationsrückstand wird programmgesteuert ohne manuelle Arbeit über ein Schleusensystem in ein Gefäß für die Entsorgung gefördert.

Die vorliegende Erfindung wird im folgenden unter Bezug auf die beigefügten Zeichnungen näher erläutert, in denen zeigen:
- Fig. 1: eine schematische Übersicht eines bevorzugten Ausführungsbeispieles der vorliegenden Erfindung,
- Fig. 2: schematisch einen erfindungsgemäßen Absetzbehälter,
- Fig. 3: schematisch einen erfindungsgemäßen Verdampfer,
- Fig. 4: den Verdampfer aus Figur 3 mit einer zusätzlichen Filterschicht,
- Fig. 5: schematisch ein anderes Ausführungsbeispiel des erfindungsgemäßen Kondensators,
- Fig. 6: den erfindungsgemäßen Kondensator aus Fig. 1 im Detail, und
- Fig. 7: schematisch eine erfindungsgemäße Flüssigkeitsringpumpe mit einem Ringflüssigkeitsabscheider.

Das Verfahren läuft im einzelnen wie folgt ab:

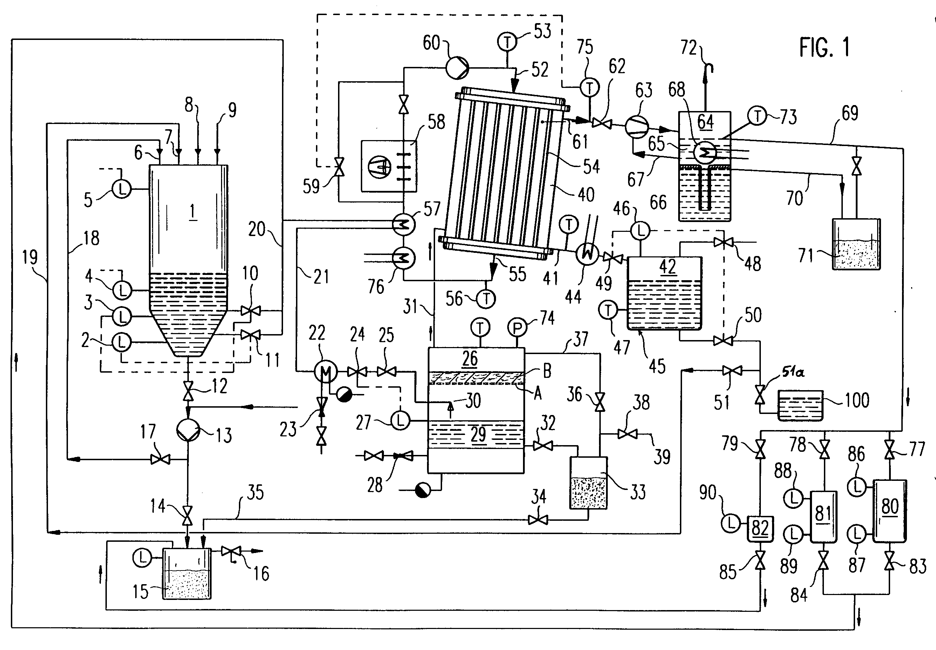

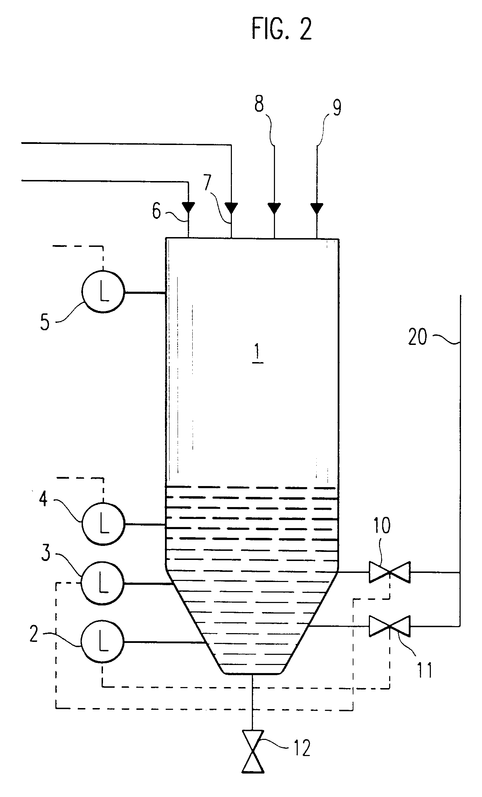

Unter Bezug auf Fig. 1 und Fig. 2 tritt das chargenweise aus der Reinigungsmaschine anfallende verschmutzte Lösemittel über die Leitung 8 in den Vorlagetank 1 der Destillation ein. Dieser Vorlagetank 1 enthält Einrichtungen, die sicherstellen, daß die Destillation kontinuierlich mit dem verschmutzten Lösemittel einschließlich dem emulgierten Wasser gespeist wird, ohne daß die Gefahr besteht, däß abgesetztes reines Wasser oder abgesetzte Schlammstoffe in hoher Konzentration in die Destillation gelangen.

Reines Wasser würde dort erheblich stören, weil der hohe Dampfdruck des Wassers ein kurzfristiges Abfallen des Vakuums zur Folge hätte und andererseits durch die hohe Verdampfungswärme die Temperatur unzulässig abfallen würde. Konzentrierte Schlammstoffe würden die Leitungen zusetzen und den Betrieb stören. Deshalb ist erfindungsgemäß der Vorlagetank mit speziellen Einrichtungen versehen, die einen gleichmäßigen Betrieb sicherstellen.

Am trichterförmigen Unterteil des Vorlagetanks 1 befinden sich Auslaßstutzen über das Ventil 10 bzw. über das Ventil 11 in unterschiedlicher Höhe. Unterhalb des Ablaßventils 11 befindet sich ein Schwimmerschalter 2, unterhalb des Ventils 10, aber oberhalb des Ventils 11 ein Schwimmerschalter 3. Beide Schwimmerschalter sind so ausgelegt, daß sie in Wasser aufschwimmen (spezifisches Gewicht 1), nicht aber im Lösemittel (spezifisches Gewicht 0,74). Würde sich nun aus der Tankfüllung nicht emulgiertes Wasser bis zur Höhe des Niveauschalters 2 angesammelt haben, so schwimmt dieser Schalter auf und schließt das Ventil 11. Die Ansaugung des Lösemittels in die Destillation erfolgt damit über das höhergelegene Ventil 10, dessen zugehöriger Niveauschalter 3 noch die Anwesenheit von Lösemittel signalisiert. Das bedeutet, der Niveauschalter 3 ist abgesunken. Damit wird nur verschmutztes Lösemittel ohne hohen Wasseranteil zur Destillation gebracht. Sollte bei einem besonders hohen Wasseranfall auch der Niveauschalter 3 unter dem Wasserspiegel liegen, so wird von diesem Schalter das Ventil 10 geschlossen und damit der Zulauf in die Destillaton automatisch unterbrochen. In diesem Fall wird auf ein Signal über das Bodenventil 12 und die nachgeschaltete Schlammpumpe 13 das Wasser entweder bei geöffnetem Ventil 14 in den Abfallbehälter 15 gefördert oder, wenn die Bodenschicht noch mehr Lösemittel emulgiert enthält, über das geöffnete Ventil 17 und die Leitung 18 über den Stutzen 6 wieder in den Tank 1 zurückgefördert, um sich erneut absetzen zu können.

Die Schwimmerventile 4 und 5 sind so eingestellt, daß sie im Lösemittel (spezifisches Gewicht 0,74) aufschwimmen. Sie signalisieren den niedrigsten Stand und den höchsten Stand im Tank 1. Ist der Schalter 5 abgesunken, der Schalter 4 aber noch nicht, so kann über das geöffnete Ventil 10 bis zu dessen Niveau der Tank in die Destillation entleert werden. Durch die Stellung der Schalter 2, 3, 4 ist stets zu erkennen, wieviel Lösemittel und wieviel Wasser sich im Tank befinden. Der Auslaß wird von diesen Schaltern gesteuert. Ist der Schalter 3 aufgeschwommen und signalisiert damit Wasser an dieser Stelle, der Schalter 4 aber untergesunken und signalisiert damit, däß keine Lösemittel mehr an dieser Stelle vorhanden sind, so wird die Destillation automatisch abgeschaltet. Der Niveauschalter 5, der ebenfalls in Lösemittel (spezifisches Gewicht 0,74) aufschwimmt, signalisiert den obersten Füllstand und damit das Schließen der Zufuhr aus der Maschine in den Tank 1.

Lösemittelhaltiger Restschlamm aus den Umlauffiltern der Reinigungsmaschine wird über die Leitung 9 ebenfalls in den Tank 1 gebracht.

Durch diese erfindungsgemäße Anordnung von Steuereinrichtungen im Tank 1 wird mit geringem technischen Aufwand erreicht, daß die Destillation mit Lösemittel gespeist wird und damit das Überkochen, das wie oben ausgeführt, die Stofftrennung dort in hohem Malte stören würde, sicher vermieden ist. Abgesetzte Schwebstoffe und Wasser werden sicher und ohne größeren Lösemittelverlust aus dem Tank entweder in ein Abfallgefäß ausgefördert oder zum nochmaligen Absetzen über die Leitung 18 und das Ventil 17 zurückgepumpt. Durch den Vorlagetank 1 und die beschriebenen Vorrichtungen kann der kontinuierliche Destillationsbetrieb ohne manuelles Eingreifen mit geringem Regelaufwand sichergestellt werden.

Das aus dem Tank 1 entnommene Lösemittel läuft über die Leitung 20 und den Wärmetauscher 57 Sowie die Leitung 21, über den dampfbeheizten Durchlauferhitzer 22 in den Verdampfer 26, wie in Fig. 1 dargestellt.

Der Verdampfer 26 wird je nach dem Siedepunkt des zu verarbeitenden Produktes im Vakuum , d.h. bei etwa 50 mbar bis 100 mbar,oder auch bei Normaldruck betrieben.

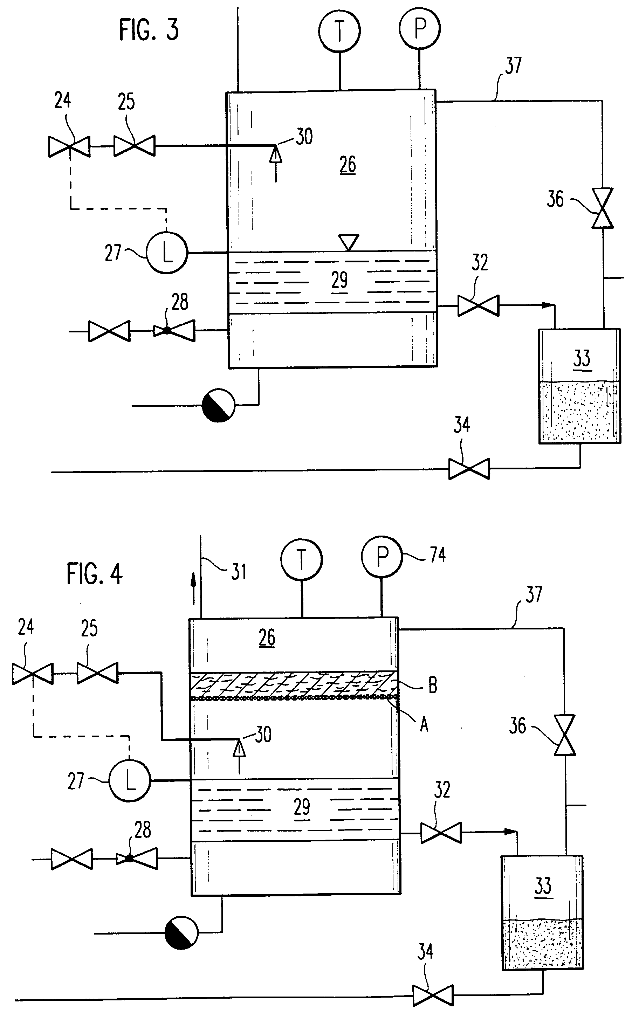

Im Unterteil des Verdampfers 26 befindet sich ein dampfbeheizter Destillierblasenboden, der über Dampf mit geregeltem Druck durch den Regler 28 auf die Destillationstemperatur eingestellt ist, wie in Fig. 3 zu sehen. Das Lösemittelbad 29 enthält eine Flüssigkeitsmenge, die 5% bis 20 % der stündlichen Destillationsleistung entspricht.

Ein Niveauregler 27 steuert das Einlaßventil 24, so daß der Zulauf immer so groß ist, daß die zulaufende Menge den laufenden Verdampfungsverlust ausgleicht.

Die Drosselstelle 25 stellt sicher, daß sich das Vakuum im Verdampfer 26 nicht bis zum Durchlauferhitzer 22 ausbreitet und damit dort noch keine Verdampfung eintritt.

Der Heizdampfdruck im Durchlauferhitzer 22 wird über den Druckregler 23 so geregelt, daß die Eintrittstemperatur des Lösemittels an der Einspritzstelle 30 im Verdampfer 25 10 bis 20°C über der Temperatur des siedenden Eades 29 liegt. Durch diese Überhitzung wird erreicht, daß etwa 10 % des Lösemittels und vor allem die dort enthaltenen Leichtsieder im Dampfraum des Verdampfer 26 verdampfen, ohne das siedende Lösemittelbad 29 zu erreichen.

Die Überhitzungswärme an der Stelle 30 würde auch ausreichen, um 1 % Wasser, bezogen auf die Lösemittelmenge im Oberteil des Verdampfers 26, zu verdampfen. Damit berührt auch das als Emulsion mit dem Lösemittel in den Verdampfer eintretende Wasser das siedende Bad 29 nicht mehr.

Das verschmutzte Lösemittel aus der Textilreinigung bringt je nach der gereinigten Ware und den eingesetzten Hilfsstoffen unterschiedliche Mengen an hochsiedenden Fremdstoffen mit, die bei der Destillation als Restschlamm auf dem Boden der Destillierblase 26 zurückbleiben. Das gilt insbesondere für die Lederreinigung, bei der hochsiedende Lederöle dem Reinigungsbad zugesetzt werden. Der Siedepunkt dieser Lederöle beträgt mehr als etwa 250°C. Da sich am Boden des Verdampfers immer mehr Hochsieder ansammeln, steigt der Siedepunkt des Lösemittels, dadurch wird weniger verdampft und der Druck im Verdampfer sinkt. Dabei wird durch den beheizten Boden die Temperatur des Bades und damit des Verdampfers automatisch erhöht, so daß trotz des kleineren Dampfdruckes weiterhin die gleiche Menge an Leichtsiedern bzw. Wasser sofort verdampft wird. Damit erfogt eine automatische Anpassung an wechselnde Schmutzmengen.

Die erfindungsgemäße Ausführung des Verdampfers 26 und der aufgeführten Vorrichtungen kann das Ausschleusen des zurückbleibenden Destillationsrückstandes auch dann automatisch vornehmen, wenn die Rückstandsmengen stark schwanken und vorher nicht bekannt sind.

Das Abschlämmen erfolgt wie beschrieben:

Das Zulaufventil 24 wird über die Maschinensteuerung geschlossen, die Verbindung zum Niveauschalter 27 unterbrochen. Die Beheizung der Destillierblase über den Regler 28 läuft weiter.

Da das Volumen des Bades 29 auf 5% bis 20 % dar stündlichen Destillationsleistung geregelt wurde, ist der Inhalt des Bades 29 nach 3 bis 12 Minuten verdampft. Auf dem Boden der Destillierblase befindet sich dann nur noch der Destillationsrükstand. Nach den genannten 3 bis 12 Minuten öffnet automatisch das Ablaßventil 32 und das Ventil 36 in der Druckausgleichsleitung zwischen dem Schlammbehälter 33 und der Leitung 37, die mit dem Dampfraum der Destillierblase 26 verbunden ist. Der Restschlamm aus dem Verdampfer 26 läuft im heißen Zustand in den Abfallbehälter 33. Nach wenigen Minuten wird das Ventil 32 geschlossen, das Zulaufventil 24 geöffnet und die Verbindung zum Niveauregler 27 wieder hergestellt. Die Einspritzung des vorgeheizten Lösemittels beginnt wieder, das Lösemittelbad 29 füllt sich auf das vorgesehene Niveau und die Destillation läuft automatisch weiter.

Nach dem Schließen des Ablaßventil 32 wird die Druckausgleichs-Verbindung zwischen dem Abfallbehälter 33 und dem Verdampfer 26 durch das Ventil 36 geschlossen. Dann wird das Ventil 38 geöffnet, und über die Leitung 39 wird aus der Stickastoffanlage, die zum Inertisieren der Reinigungsmaschine vorhanden ist, mit Stickstoff unter einem Druck von etwa 0,5 bar der Schlamm aus dem Behälter 33 über das geöffnete Ventil 34 und die Leitung 35 in den Abfallbehälter 15 gedrückt. Dabei wird soviel Stickstoff in den Behälter 15 gespült, bis durch das Überdruckventil 16 die vorhandene Restluft aus dem Behälter 15 entfernt ist. Damit enthält der Gasraum des Behälters 15 nur noch Stickstoff. Das ist notwendig, weil der destillierte Restschlamm aus dem Behälter 33 mit der Destillationstemperatur, die über dem Flammpunkt des Produktes liegt, in den Behälter 15 gelangt. Der Restschlamm kann nach Abkühlung im Behälter 33 jedoch auch mit Druckluft ausgefördert werden. Während des Ausdrückvorganges von etwa 10 Sekunden wird etwas Lösemittel im Kondensator angesammelt. Das stört jedoch den Ablauf nicht.

Wenn stark verschmutzte und stark schaumbildende Flüssigkeiten destilliert werden, besteht ständig die Gefahr des Überkochens. Dabei werden Schaumpartikel, die noch schmutzbeladene Tropfen enthalten, in das Reinprodukt eingetragen. Damit wird das Reinprodukt verschmutzt und unbrauchbar gemacht. In der Regel wird das Schäumen durch Zusätze, die die Schaumbildung reduzieren, bekämpft. Trotzdem ist in den meisten Fällen ein reines Destillat nur dann zu erhalten, wenn die Destillationsleistung und damit die Verdampfungsgeschwindigkeit erheblich reduziert werden. Die Reduzierung kann bis auf ein Drittel und weniger der Nennleistung der Destillationsanlage notwendig sein.

Wenn dann trotzdem, wenigstens zeitweise, eine gewisse Menge nicht verdampfter Substanz übertritt, kann das gesamte destillierte Produkt im Tank verunreinigt werden.

Dieser Effekt des Schäumens und der Verunreinigung des Destillates ist in der Textil- und Lederreinigung vor allem dann sehr unangenehm, wenn stark schmutzbeladene Arbeitshandschuhe oder Arbeitsanzüge oder dunkel gefärbte Lederbekleidung gereinigt werden. Lederbekleidung ist vor allem dann kritisch, wenn sie nach der Herstellung das erste mal zur Reinigung kommt.

Durch das in Figur 4 dargestellte Ausführungsbeispiel kann jedoch die Schaumbildung so gelenkt werden, daß auch bei voller Destillationsleistung kein Schmutzübergang in das reine Destillat erfolgt. Die Figur 4 zeigt den Verdampfer 26 mit den zugehörigen Zulauf- und Ablaufleitungen. Über das Ventil 28 wird Heizdampf unter den Boden des unter Vakuum betriebenen Verdampfers gebracht und das Kondensat über den angezeigten Kondensatabscheider ausgetragen. Das schmutzige, zur Verdampfung bestimmte Lösemittel wird über die Ventile 24 und 25 und die Einspritzstelle 30, die zentral oder außerhalb der Mitte des Verdampfers liegen kann, in den Verdampfer eingespritzt.

Das siedende Lösemittelbad am Boden des Verdampfers wird über den Niveauregler 27 so geregelt, daß das Volumen des siedenden Lösemittelbades bei 5% bis 10% der stündlichen Durchsatzmenge der Destillationsanlage gehalten wird. Grundsätzlich sollte dieses Bad gerade noch so hoch sein, daß eine sichere Niveaumessung möglich ist.

Außerdem kann durch den Einbau einer Sieb-Filterschicht in den Verdampfer 26 der Übertritt von schmutzhaltigen Flüssigkeitstropfen oder Fremdstoffpartikeln aus dem Verdampfer 26 in den Kondensator 40 sicher auch dann vermieden werden, wenn die Flotte im Verdampfer 26 extrem stark verschmutzt ist. Das Destillat bleibt klar und farblos.

Vorteilhafterweise wird die Filterschicht oberhalb der Einspritzung des verunreinigten Lösemittels in den Verdampfer 26, z.B. 10 cm oberhalb der Badoberfläche, im Verdampfer angeordnet. Die Filterschicht kann dabei z. B. aus einem oder mehreren Drahtgeweben A und einem gegebenenfalls dazwischen liegendem Stahlwollevlies B bestehen. Das Vlies kann dabei etwa 1 cm dick oder auch dicker sein. Die Filterschicht kann entweder selbsttragend sein oder auf einer entsprechenden Stützkonstruktion in dem Verdampfer 26 aufliegen. Eine andere Möglichkeit ist, das oder die Drahtgewebe über den gesamten Querschnitt des Verdampfers steif auszubilden, So daß sie selbsttragend sind.

Es zeigt sich, daß der Siedevorgang einerseits nicht beeinflußt wird, andererseits der Dampf ungehindert durch die Schicht hindurchströmt, während die Schaumteilchen und damit alle Flüssigkeitstropfen von dieser Filterschicht zurückerhalten werden. Damit ist kein Übertritt von verschmutzten Flüssigkeitstropfen in das Destillat zu befürchten, und das Destillat ist selbst bei voller Destillationsleistung einwandfrei sauber.

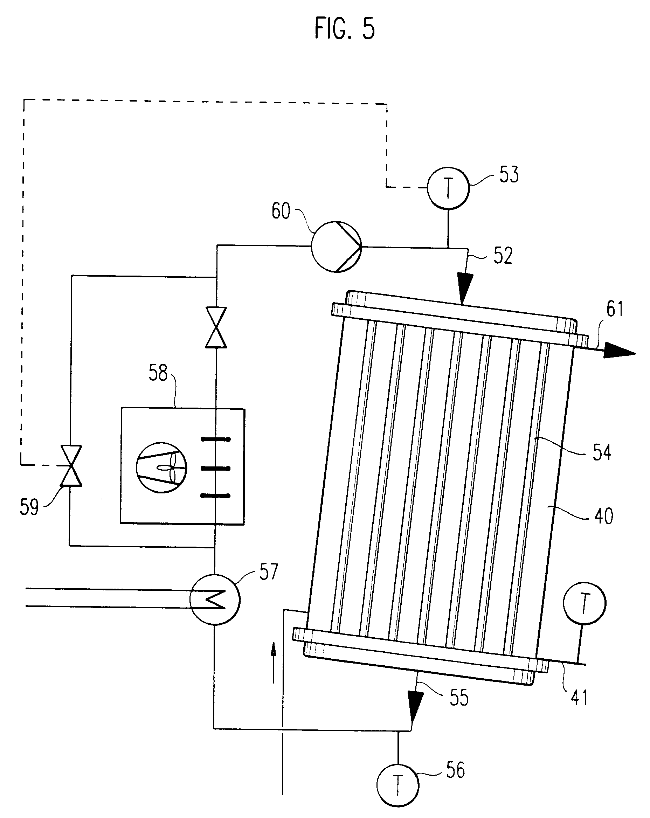

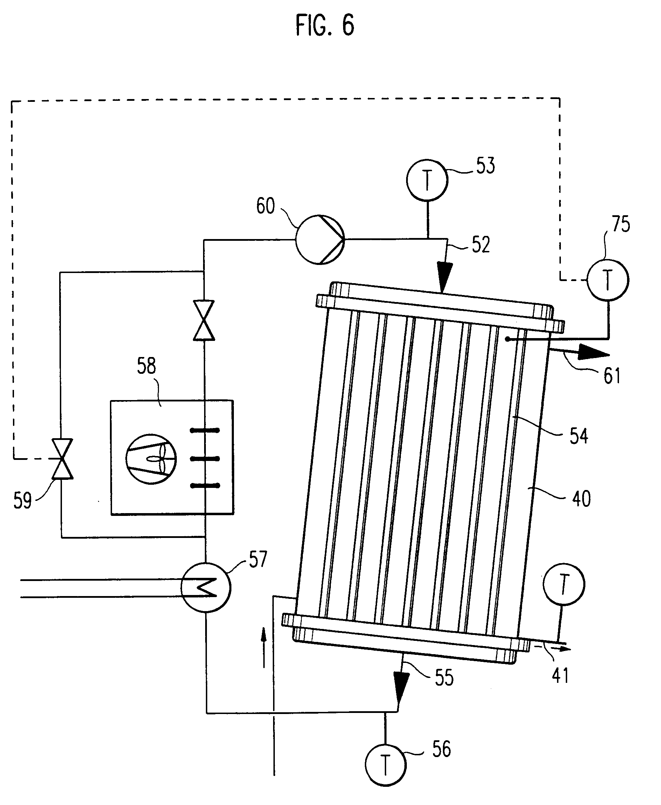

Nachdem somit im Verdampfer 26 die Hochsieder aus dem verschmutzten Lösemittel abgetrennt sind, gelangt das Gemisch aus Lösemitteldampf und Leichtsiedern über die Leitung 31 in den Kondensator 40, wie in Fig. 1 gezeigt. Der Dämpfeeintritt erfolgt in den Unterteil des Kondensators. Der enthält senkrechte Kühlrohre 54, wie in Fig. 5 und 6 dargestellt, die von einem Kühlmittel von oben (Leitung 52) nach unten (Leitung 55) durchströmt werden.

Das über die Leitung 31 eintretende Dampfgemisch strömt im Kondensator 40 von unten nach oben der Kühlflüssigkeit entgegen.

Wesentliches Problem einer fraktionierten Kondensation ist es, daß bei relativ hoher Temperatur kondensiert werden muß, wobei die Temperaturführung sehr genau auf die Siedepunkte der zu trennenden Komponenten geregelt sein muß. Dies erfolgt in folgender Weise:

Durch einen geschlossenen Kühlkreislauf strömt Kühlmittel vom Austritt 55 aus dem Kondensator 40 über die Temperaturmessung 56 und einen Wärmetauscher 57 sowie einen flüssigkeits- oder luftgekühlten Wärmetauscher bzw. Kühler 58 durch eine regelbare Umlaufpumpe 60, bevor das Kühlmittel bei 52 wieder in den Kondensator 40 eintritt und dessen Kühlrohre durchläuft. Das Kühlmittel tritt dabei an der Seite in den Kondensator 40 ein, an der die dampfförmigen Leichtsieder aus diesem abgeführt werden, und tritt an der Seite aus dem Kondensator aus, an der der Dampf vom Verdampfer zugeführt und das reine Lösemittel abgeführt werden.

Die Leichtsiederfraktion beim Austritt 61 aus dem Kondensator darf nicht zu viel unkondensiertes Lösemittel enhalten. Der Restgehalt des bei 41 ablaufenden reinen kondensierten Lösemittels an nicht abgetrennten Leichtsiedern wird um so niedriger, je höher die Temperatur des Kühlmittels an der Stelle 55 beim Austritt aus dem Kondensator 40 und somit die Temperatur des abgeführten Lösemittels ist.

Andererseits ist der Restgehalt der Leichtsiederfraktion am Austritt 61 aus dem Kondensator 40 umso ärmer an mitgehenden Lösemitteln, je niedriger die Temperatur des Kühlmittels beim Eintritt 52 in den Kondensator 40 und somit die Temperatur der dampfförmig abgeführten Leichtsiederfraktion ist.

Im Kühlkreislauf des Kondensators 40 ist der Wärmetauscher 57 angeordnet, mit dem etwa die Hälfte der über den Kühlkreislauf abgeführten Kondensationswärme zur Vorwärmung des Lösemittels, das zur Destillation geht, zurückgewonnen wird. Die Restwärme bei einem Temperaturniveau von 80°bis 100°C, z. B. bei der Destillation von n-Undecan bei einem Druck von etwa 100 mbar, wird Ober den Kühler 58, dessen Austrittstemperatur an der Meß-Stelle 75 über einen Bypass mit Regelventil 59 gesteuert wird, an die Umgebung abgeführt. Dabei wird gleichzeitig die Temperatur des Kühlmittels am Eintritt 52 in den Kondensator 40 über das in einem Bypass zu dem Luftkühler 58 angeordnete Regelventil 59 geregelt, das auf die Temperatur der dampfformigen Fremdstoffe an einer Meßstelle 75 am Austritt der Fremdstoffe aus dem Kondensator 40 reagiert.

Damit kann die Kühlmitteltemperatur beim Eintritt des Kühlmittels in den Kondensator 40 so geregelt werden, däß am Austritt 61 der Leichtsieder die gewünschte Zusammensetzung der Leichtsiederfraktion erreicht wird.

Die Kühlmitteltemperatur am Austritt aus dem Kondensator 40 an der Stelle 55 wird über die Menge des umlaufenden Kühlmittels mittels der regelbaren Pumpe 60 eingestellt.

Die Temperatur an der Stelle 55 liegt stets höher als die Temperatur an der Stelle 52. Die Temperaturdifferenz wird umso kleiner, je größer die Menge an umlaufendem Kühlmittel ist. Damit kann die Destillatqualität am Ablauf 41 sowie der Verlust an Hauptprodukt, d. h. an Lösemittel, am Austritt 61 unabhängig voneinander eingestellt werden.

In Fig. 5 ist der Kondensator aus Fig. 1 mit einer anderen Temperaturregelung gezeigt. Die Temperaturregelung des Kühlmittels erfolgt über eine Temperaturmeßstelle 53 am Eintritt des Kühlmittels in den Kondensator 40, die das Regelventil 59 steuert.

In Fig. 6 ist das in Fig. 1 gezeigte Ausführungsbeispiel der Temperaturregelung für das Kühlmittel, das eine schnelle und genaue Regelung der Temperatur der dampfförmigen Fremdstoffe im oberen Teil des Kondensators ermöglicht, im Detail gezeigt. Die Temperatur des Kühlmittels am Eintritt in den Kondensator 40 wird durch die Temperatur der dampfförmigen Fremdstoffe im oberen Teil des Kondensators geregelt. Dabei ist der die Temperatur des Kühlmittels beim Eintritt in den Kondensator regelnde luft- oder flüssigkeitsgesteuerte Kühler 58 des Kuhlkreislaufes mittels einer Temperatur-Meßstelle 75 am Austritt der dampfförmigen Fremdstoffe an der oberen Seite des Kondensators 40 gesteuert.

Wie in Fig. 6 zu sehen ist, weist die Leitung 61, über die die dampfförmigen leichtsiedenden Fremdstoffe aus der oberen Seite des Kondensators 40 abgesaugt werden, eine Temperatur-Meßstelle 75 auf, durch die die Temperatur der dampfförmigen Fremdstoffe an dieser Stelle gemessen wird. Die in dieser Temperatur-Meßstelle 75 gemessene Temperatur wird zur Regelung der Temperatur des Kühlmittels beim Eintritt in den Kondensator 40 verwendet. Im gezeigten Ausführungsbeispiel ist ein Regelventil 59 in einem Bypass zum Luftkühler 58 angeordnet. Das Regelventil 59 wird von der Temperatur-Meßstelle 75 am Austritt der dampfförmigen Fremdstoffe aus dem Kondensator 40 gesteuert, und regelt damit über den luft- oder flüssiggekühlten Kühler 58 die Temperatur des Kühlmittels beim Eintritt in den Kondensator 40.

Dieses Ausführungsbeispiel gewährleistet eine schnelle und zuverlässige Regelung der Temperatur der dampfförmigen Fremdstoffe im oberen Teil des Kondensators und damit die für eine zuverlässige Abtrennung der leichtsiedenden Fremdstoffe vom Lösemittel im Kondensator notwendige hohe Trennschärfe.

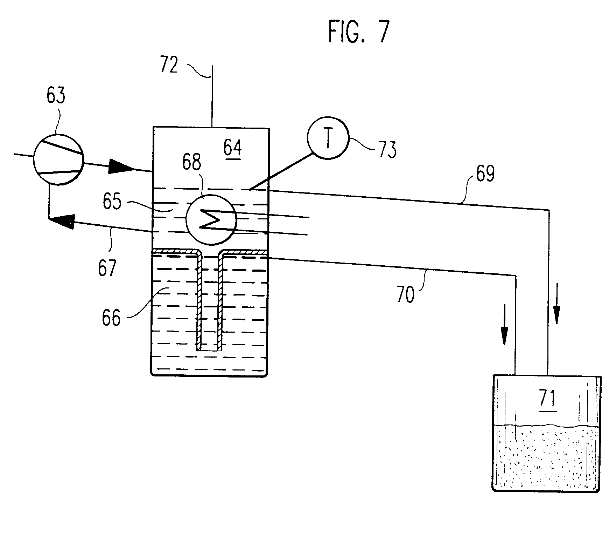

Die nicht kondensierten Leichtsieder werden aus dem Kondensator am Kopf über die Leitung 61, das Rückschlagventil 62 und die Vakuumpumpe 63 abgesaugt, wie in Fig. 7 gezeigt. Die Vakuumpumpe 63 ist bevorzugt eine Flüssigkeitsringpumpe, der ein kombinierter Produkt/Wasserabscheider 64 nachgeschaltet ist. Die mitgerissene Betriebsflüssigkeit der Flüssigkeitsringpumpe 63 sammelt sich im Behälter 64 und wird dort über einem Wasserkühler 68 auf Umgebungstemperatur abgekühlt. Im Unterteil des Abscheidebehälters 64 befindet sich der Wassersammelbehälter 66, darüber mit einem Boden mit Abtauchung getrennt das Becken für die spezifisch leichteren Leichtsieder und einer gewissen Restmenge an Lösemittel.

Das gekühlte Bad hat über die Leitung 67 eine Rücklaufverbindung für die Betriebsflüssigkeit zurück in die Ringpumpe 63.

Die Flüssigkeitsringpumpe 63 ist hinsichtlich ihrer Förderleistung so bemessen, daß im laufenden Betrieb die Höhe des Vakuums über die Temperatur der Ringflüssigkeit gesteuert werden kann. Die Einstellung erfolgt über die Temperatur 73 und den Systemdruck an der Stelle 74 im Verdampfer 26.

Durch die genannte erfindungsgemäße Anordnung wird sichergestellt, daß mit dem Leichtsiederstrom mitkommendes Wasser nicht als Betriebsflüssigkeit in die Pumpe 63 zurückgeführt werden kann. Dieses Wasser würde Sofort, wegen seines hohen Dampfdruckes gegenüber der Produktfraktion aus der Ringflüssigkeit verdampfen und das Vakuum zerstören.

Der anfallende Überschuß an Produktfraktion wird über die Leitung 69, der Überschuß an Wasser wird über die Leitung 70 in den Abfallbehälter für Leichtsieder 71 gefördert.

Mitkommende permanente Gase werden über die Entlüftung 72 ins Freie abgeleitet.

Das reine Lösemittel, frei von Hochsiedern und Leichtsiedern, wird am Fuße des Kondensers 40 über die Leitung 41 in einen geschlossenen Behälter 42 gefördert. Das Lösemittel tritt an der Stelle 41 mit seiner Siedetemperatur beim jeweiligen Systemdruck aus.

Der Behälter 42 arbeitet als automatische Schieuse unabhängig davon, ob das System bei Atmosphärendruck oder unter Vakuum arbeitet. Das heiße Lösemittel läuft an der Stelle 41 mit Gefälle über den gegebenenfalls vorgesehenen Kühler 44 und das geöffnete Ventil 49 in den geschlossenen Behälter 42. Ist der Behälter gefüllt, schließt der Niveauschalter 46 das Ventil 49. Nach kurzer Verzögerung öffnen das Ablaßventil 50 und das Entlüftungsventil 48. Das reine Lösemittel läuft zum Tank 100. Gegebenenfalls kann das reine Lösemittel aus dem Tank 42 mit Stickstoff oder Druckluft ausgefördert werden, z.B. wenn der Reintank 100 höher liegt als der Schleusenbehälter 42. Beim Ausfördern des reinen Lösemittels mit Druckluft ist es vorteilhaft, den Kühler 44 vor dem Tank 42 vorzusehen, um das reine Lösemittel vorzukühlen. Dadurch wird die Gefahr vermieden, daß sich das heiße Lösemittel beim Ausblasen aus dem Tank 42 entflammt.

Ist der Schleusenbehälter 42 leer, z. B. nach einer Minute, so werden die Ventile 48 und 50 geschlossen und das Ventii 49 wird wieder geöffnet.

Beim Anfahren der Anlage, solange der Kondensator 40 und damit auch dessen Kühlkreislauf noch kalt sind, kondensiert am Fuß des Kondensers 40 das gesamte Lösemittel einschließlich der Leichtsieder. Während dieser Zeit wird das ausgeförderte Destillat bei Schließen des Ventils 51a und Öffnen des Ventils 51 im Kreis zurückgefahren, über die Leitung 19 und den Stutzen 7 in den Vorlagetank 1. Erst, wenn die Temperatur 53 sowie die gewünschte Temperaturdifferenz zwischen Kühlmitteleintritt 52 und Kühlmittelaustritt 55 erreicht ist, wird das Ventil 51 für die Rückförderung geschlossen und das Ventil 51a in den Reintank geöffnet. Vorteilhafterweise kann die Umschaltung in den Reintank von der Temperatur an der Meßstelle 75 abhängig gemacht werden.

Um beim Anfahren des Systems wenig Zeit zu verlieren, ist es vorteilhaft, in dem Um beim Anfahre des Systems wenig Zeit zu verlieren, ist es vorteilhaft, in dem Kühlmittelkreislauf eine Anfahrheizung 76 einzubauen. Durch die Anfahrheizung kann der Kondensator 40 innerhalb von wenigen Minuten auf die gewünschte Betriebstemperatur erhitzt werden. Andernfalls muß das aus dem Kondensator an der Stelle 41 ablaufende Lösemittel beim Anfahren des Systems wieder zurück in den Verdampfer 26 geleitet werden, da es noch keine ausreichende Reinheit aufweist.

Aus der Beschreibung ist zu erkennen, daß die Destillationsanlage gemäß der vorliegenden Erfindung vom verschmutzten Lösemittel eine Hochsiederfraktion abtrennt und über die Komponenten 32, 33, 34, 35, 15 ausfördert. Die abgetrennte Leichtsiederfraktion wird über die Komponenten 61, 62, 63, 69, 70, 71, 72 ausgefordert. Die Leichtsiederfraktion ihrerseits kann aus einer Produktfraktion und einer Wasserfraktion bestehen.

Naturgemäß wird die Trennschärfe der abgetrennten Leichtsieder, deren Menge gering ist gegenüber der Menge, des Hauptdestillates, umso geringer, je geringer der Abstand der Siedetemperaturen zwischen Leichtsiedern und Hauptdestillat ist. Praktische Beobachtungen haben ergeben, daß mit geringer werdendem Abstand der Siedetemperaturen von Hauptprodukt und Leichtsiedern trotzdem eine befriedigende Reinheit des Hauptdestillates erreicht wird, wenn die Kopftemperatur an der Stelle 61 (vgl. Fig. 1, 5 und 6 etwa 10 bis 20°C höher gehalten wird als üblich. Damit ist das Hauptdestillat in befriedigender Weise frei von Fremdstoffen, jedoch werden bis zu 20 % mehr Menge des Stoffes des Hauptdestillates in die Leichtsiederfraktion gebracht.

Eine befriedigend genaue Abtrennung der Leichtsieder ist aber dadurch möglich, daß das Leichtsiederkondensat mit seinem noch zu großen Anteil der Substanz des Hauptdestillates für sich alleine ein zweites und das daraus abgetrennte Leichtsiederkondensat mindestens ein weiteres Mal durch die beschriebene Destillationsapparatur gefahren wird. Dieses stufenweise Nachdestillieren belastet die Destillationskapazität nur geringfügig, wenn wie folgt vorgegangen wird:

Beim ersten Destillationsdurchlauf des mit Leichtsiedern verunreinigten Lösemittels werden bei entsprechend hoher Kopftemperatur mit den schwer abzutrennenden Leichtsiedern etwa 10% bis 20% der Gesamtmenge oder auch mehr in die Leichtsiederfraktion abgetrennt.

Danach wird gemäß den Figur 1 die bei 69 ablaufende Leichtsiederfraktion bei offenem Ventil 77 in dem Behälter 80 gesammelt. Diese Fraktion kann 20 oder mehr % der Gesamtdestillatmenge betragen. Ist nach der Füllstandsanzeige 86 des Behälters 80 gefüllt, so wird das Ventil 10 bzw. 11 vom Schmutztank geschlossen und das Ventil 83 geöffnet. Damit wird die abgetrennte Leichtsiederfraktion ein zweites Mal durch die Destillationsanlage gefahren. Mit dem Öffnen des Ventils 83 wird das Ventil 77 geschlossen und das Ventil 78 geöffnet, so daß die zur soeben durchdestillierten Leichtsiederfraktion gehörende, abgetrennte Leichtsiederfraktion im Behälter 81 aufgefangen wird. Ventile 10 und 11 bleiben weiter geschlossen. Ist der Behälter 80 leer (Niveauanzeige 87), so wird das Ventil 83 geschlossen, ebenso wird das Ventil 78 geschlossen, und es werden Ventil 84 und 79 geöffnet. Damit wird die zweite Leichtsiederfraktion aus Behälter 81 durch die Destillation gefahren. Das Hauptdestillat geht wie beim ersten Durchgang in den Reintank 100. Die nun recht hoch angereicherte Leichtsiederfraktion aus dem angereicherten Produkt im Behälter 81 wird in den Behälter 82 gefahren. Ist Behälter 81 leer (Niveaumessung 89), so wird Ventil 84 geschlossen, Ventil 79 wird ebenfalls geschlossen und Ventil 85 geöffnet. Die nun hoch angereicherte Leichtsiederfraktion wird durch das Ventil 85 in den Abfallbehälter 15 gebracht. Mit dem Schließen des Ventils 84 und des Ventiles 79 wird wieder das normale verunreinigte Lösemittel aus dem Schmutztank über die geöffneten Ventile 10 bzw. 11 destilliert und die Leichtsiederfraktion über das geöffnete Ventil 77 in den Tank 80 gebracht.

Durch ein derartiges stufenweises Verfahren, das in der beschriebenen Weise statt über drei Stufen auch über gleich angeordnete weitere Stufen das Höherkonzentrieren der Leichtsiederfraktion bewirkt, kann mit geringer Mehrbelastung der Destillationskapazität eine hohe Anreicherung der Leichtsieder erreicht werden, bei gleichzeitiger hoher Reinheit der Hauptfraktion (reines Lösemittel), die bei 41 abgenommen und zum Reintank 100 geführt wird.

Die Größen der Behälter 80, 81 und 82 bzw. weitere Behälter sind so gestuft, daß der Behälter 80 etwa 25 bis 30 % der gesamten Destillationsleistung pro Stunde auffangen kann. Der Behälter 81 faßt 25 bis 30 % vom Behälter 80, der Behälter 82 etwa 25 bis 30 % des Volumens von Behälter 81. Damit wird stündlich als Zwischentakt das Aufkonzentrieren der Leichtsieder durchgeführt. Bei 20 % Hauptprodukt in der Leichtsiederfraktion beim ersten Durchgang benötigt damit der Gesamtvorgang der Aufkonzentration etwa 25 % der Destillationskapazität. Dieses Ergebnis ist günstiger als eine Reduzierung der Kopftemperatur, die im ersten Durchgang den Mengenanteil Hauptprodukt in der Leichtsiederfraktion reduziert, aber automatisch einen höheren Anteil Leichtsieder im Hauptprodukt beläßt.

## Patentansprüche

1. Verfahren zur Wiederaufbereitung eines verunreinigten Lösemittels unter Abtrennung verunreinigender Fremdstoffe, bei dem kontinuierlich in einem ersten Verfahrensschritt Fremdstoffe, deren Siedepunkt über dem Siedepunkt des reinen Lösemittels liegt, in einem Verdampfer (26) abgetrennt werden, und in einem zweiten Verfahrensschritt Fremdstoffe, deren Siedepunkt unter dem Siedepunkt des reinen Lösemittels liegt, in einem Kondensator (40) abgetrennt werden, wobei reines Lösemittel im Kondensator (40) auskondensiert und abgeführt wird, und die Fremdstoffe, deren Siedepunkt unter dem Siedepunkt des reinen Lösemittels liegt, sowie gegebenenfalls Wasser, aus dem Kondensator (40) in dampfförmigen Zustand abgeführt werden.
dadurch gekennzeichnet,
daß die Temperatur der dampfförmigen Fremdstoffe bei Austritt aus dem Kondensator (40) und die Temperatur des kondensierten reinen Lösemittels beim Austritt aus dem Kondensator (40) mittels eines geschlossenen separaten Kühlkreislaufes, dessen Kühlmittel durch den Kondensator strömt, folgenderweise geregelt werden:
- die Temperatur des Kühlmittels beim Eintritt in den Kondensator (40) wird mittels einer dem Kühlmittelkreislauf zugeordneten Regeleinrichtung geregelt, wodurch die Temperatur der an der gleichen Seite des Kondensators (40) austretenden dampfförmigen Fremdstoffe eingestellt wird;
- die Temperatur des kondensierten reinen Lösemittels beim Austritt aus dem Kondensator (40) wird mittels der Durchflußmenge des durch die Kühlrohre des Kondensators fließenden Kühlmittels des Kühlkreislaufes geregelt.

2. Verfahren gemäß Anspruch 1
dadurch gekennzeichnet,
daß die Temperatur des Kühlmittels beim Eintritt in den Kondensator (40) über ein in einem Bypass zu einem Kühler (58) angeordnetes Regelventil (59) geregelt wird, das durch die Temperatur der dampfförmigen Fremdstoffe beim Austritt aus dem Kondensator (40) gesteuert wird.

3. Verfahren gemäß einem der vorhergehenden Ansprüche,
dadurch gekennzeichnet,
daß das verunreinigte Lösemittel flüssig in den Verdampfer (26) eingepritzt wird, wobei ein Teil des verunreinigten Lösemittels und die Fremdstoffe, deren Siedepunkt unter dem Siedepunkt des reinen Lösemittels liegt, sofort verdampfen, und der andere Teil des verunreinigten Lösemittels und die Fremdstoffe, deren Siedepunkt über dem Siedepunkt des reinen Lösemittels liegt, in ein Lösemittelbad (29) absinken.

4. Verfahren nach Anspruch 3,
dadurch gekennzeichnet,
daß das verunreinigte Lösemittel in den Raum oberhalb der Oberfläche des Lösemittelbades (29) in den Verdampfer (26) eingespritzt wird.

5. Verfahren gemäß Anspruch 3 oder 4,
dadurch gekennzeichnet,
daß das verunreinigte Lösemittel vor dem Einspritzen in den Verdampfer (26) durch einen Durchlauferhitzer (22) auf eine Einspritztemperatur erhitzt wird, die vorzugsweise zwischen 10°C und 20°C über der Verdampfungstemperatur des Lösemittels beim im Verdampfer (26) herrschenden Innendruck liegt.

6. Verfahren gemäß einem der Ansprüche 3 bis 5
dadurch gekennzeichnet,
daß das Lösemittelbad beheizt ist und zur Niveausteuerung auf ein Volumen geregelt wird, das 5% bis 20% der stündlichen Gesamt-Wiederaufbereitungsmenge an Lösemittel entspricht.

7. Verfahren gemäß einem der Ansprüche 3 bis 6,
dadurch gekennzeichnet,
daß das Lösemittelbad (29) durch periodisches Unterbrechen der Lösemitteleinspritzung in den Verdampfer (26) für eine Zeit von 3 bis 12 Minuten bis auf einen nicht verdampfbaren Rückstand eingedampft wird, woraufhin dieser Rückstand aus dem Verdampfer (26) vollständig ausgefördert wird.

8. Verfahren gemäß Anspruch 7,
dadurch gekennzeichnet,
daß der Rückstand aus dem Verdampfer (26) mittels einer Zeitschaltung automatisch ausgefördert wird.

9. Verfahren gemäß einem der vorhergehenden Ansprüche,
dadurch gekennzeichnet,
daß das reine Lösemittel aus dem Kondensator (40) mittels einem Schleusensystem entnommen wird.

10. Verfahren gemäß Anspruch 9,
dadurch gekennzeichnet,
daß das reine Lösemittel durch einen dem Schleusensystem vorgeschalteten Kühler (44) vorgekühlt wird.

11. Verfahren gemäß einem der vorhergehenden Ansprüche,
dadurch gekennzeichnet,
daß der geschlossene separate Kühlkreislauf sowie der Kondensator (40) vor bzw. bei Beginn des Verfahrens durch eine Anfahrheizung (76) auf die gewünschte Betriebstemperatur gebracht werden.

12. Verfahren gemäß einem der vorhergehenden Ansprüche,
dadurch gekennzeichnet,
daß die Fremdstoffe, deren Siedepunkt unter dem des reinen Lösemittels liegt, sowie gegebenenfalls Wasserdampf, aus dem Kondensator (40) über eine Flüssigkeitsringpumpe abgesaugt werden, der ein Ringflüssigkeitsabscheider (64) nachgeschaltet ist, wobei der Druck im Kondensator (40) und im Verdampfer (26) über die Temperatur der Ringflüssigkeit gesteuert wird.

13. Verfahren gemäß Anspruch 12,
dadurch gekennzeichnet,
daß die aus dem Kondensator (40) abgezogenen Fremdstoffe und das gegebenenfalls aus dem Kondensator (40) abgezogene Wasser im Ringflüssigkeitsabscheider (64) abgeschieden, getrennt gesammelt und getrennt entnommen werden, so daß die als Betriebsflüssigkeit der Flüssigkeitsringpumpe dienenden Fremdstoffe kein Wasser enthalten.

14. Verfahren gemaß einem der vorhergehenden Ansprüche,
dadurch gekennzeichnet,
daß das verunreinigte Lösemittel vor dem Zuführen zum Verdampfer (26) in einem Absetzbehälter (1) von sich absetzendem Wasser und sich absetzenden Fremdstoffen grob gereinigt wird.

15. Verfahren gemäß Anspruch 14,
dadurch gekennzeichnet,
daß das grob gereinigte Lösemittel dem Absetzbehälter (1) über sich auf unterschiedlichen Höhen befindliche Auslässe (10, 11) entnommen wird, die jeweils durch knapp unter ihnen angeordnete, in Wasser aufschwimmende Schwimmerschalter (2, 3) gesteuert werden.

16. Verfahren gemäß Anspruch 15,
dadurch gekennzeichnet,
daß der jeweilige Auslaß (10, 11) geschlossen wird, wenn der entsprechende Schwimmerschalter (3, 2) in Wasser aufschwimmt.

17. Verfahren gemäß einem der vorhergehenden Ansprüche,
dadurch gekennzeichnet,
daß die dampfförmigen Fremdstoffe sowie gegebenenfalls mitverdampftes Lösemittel, die aus dem Kondensator (40) abgeführt werden, dem Verdampfer (26) und dem Kondensator (40) mindestens ein weiteres Mal zugeführt und in einem oder mehreren Nachdestillationsschritten nachdestilliert werden.

18. Verfahren gemäß Anspruch 17,
dadurch gekennzeichnet,
daß während der Nachdestillation keine Zufuhr von neuem verunreinigtem Lösemittel zum Verdampfer (26) erfolgt, und daß die dampfförmigen Fremdstoffe sowie das mitverdampfte Lösemittel nach jedem Destillationsschritt in einem separaten Behälter (80, 81, 82) gesammelt werden.

19. Vorrichtung zur Wiederaufbereitung eines verunreinigten Lösemittels unter Abtrennung verunreinigender Fremdstoffe, mit einem Verdampfer (26) zum Abtrennen von Fremdstoffen, deren Siedepunkt über dem Siedepunkt des reinen Lösemittels liegt, und einem dem Verdampfer (26) nachgeordneten Kondensator (40) zum Abtrennen von Fremdstoffen, deren Siedepunkt unter dem Siedepunkt des reinen Lösemittels liegt, wobei der Kondensator (40) einen Eintritt für den vom Verdampfer (26) kommenden Dampf und einen Austritt für kondensiertes reines Lösemittel, sowie einen Austritt für die dampfförmigen Fremdstoffe, deren Siedepunkt unter dem Siedepunkt des reinen Lösemittels liegt, aufweist,
dadurch gekennzeichnet,
daß der Kondensator (40) vom Kühlmittel eines geschlossenen separaten Kühlkreislaufes durchströmt wird, daß der geschlossene Kühlkreislauf eine Regeleinrichtung (58, 59) zur Einstellung der Temperatur des Kühlmittels beim Eintritt in den Kondensator (40) aufweist, die somit zur Einstellung der Temperatur der dampfförmigen Fremdstoffe beim gleichseitigen Austritt aus dem Kondensator (40) dient, und daß der geschlossene Kühlkreislauf eine Umlaufpumpe (60) zum Regeln der Durchflußmenge des Kühlmittels im Kondensator aufweist, die damit zur Einstellung der Temperatur des kondensierten reinen Lösemittels beim Austritt aus dem Kondensator (40) dient.

20. Vorrichtung gemäß Anspruch 19,
dadurch gekennzeichnet,
daß die Regeleinrichtung aus einem Kühler (58) und einem in einem Bypass zu diesem angeordneten Regelventil (59) besteht, das durch die Temperatur der dampfförmigen Fremdstoffe beim Austritt aus dem Kondensator geregelt wird.

21. Vorrichtung gemäß einem der Ansprüche 19 bis 20,
dadurch gekennzeichnet,
daß der Verdampfer (26) im oberen Teil als Entspannungsverdampfer und im unteren Teil als Blasenverdampfer mit beheiztem Boden ausgeführt ist.

22. Vorrichtung gemäß Anspruch 21,
dadurch gekennzeichnet,
daß der Verdampfer eine zylindrische Form hat, wobei die Einspritzung des Lösemittels in den oberen Teil des Verdampfers erfolgt.

23. Vorrichtung gemäß Anspruch 22,
dadurch gekennzeichnet,
daß der untere Teil des Verdampfers ein Lösemittelbad (29) aufweist, dessen Volumen auf 5% bis 20% der stündlichen Gesamt-Wiederaufbereitungsmenge des Lösemittels regelbar ist.

24. Vorrichtung gemäß Anspruch 23,
dadurch gekennzeichnet,
daß in dem Verdampfer (26) eine Filterschicht (A, B) oberhalb der Oberfläche des Lösemittelbades (29) angeordnet ist.

25. Vorrichtung gemäß Anspruch 24,
dadurch gekennzeichnet,
daß die Filterschicht (A, B) oberhalb der Einspritzung (30) des Lösemittels in dem Verdampfer angeordnet ist.

26. Vorrichtung gemäß einem der Ansprüche 19 bis 25,
dadurch gekennzeichnet,
daß das reine Lösemittel aus dem Kondensator (40) über ein Schleusensystem (42) entnehmbar ist.

27. Vorrichtung gemäß Anspruch 26,
dadurch gekennzeichnet,
daß dem Schleusensystem ein Kühler (44) zur Vorkühlung des reinen Lösemittels vorgeschaltet ist.

28. Vorrichtung gemäß einem der Ansprüche 19 bis 27,
dadurch gekennzeichnet,
daß der geschlossene separate Kühlkreislauf eine Anfahrheizung (76) aufweist, durch die der Kondensator (40) vor bzw. bei Beginn des Verfahrens auf die gewünschte Betriebstemperatur gebracht werden kann.

29. Vorrichtung gemäß einem der Ansprüche 19 bis 28,
gekennzeichnet durch
eine Flüssigkeitspumpe zum Absaugen der dampfförmigen Fremdstoffe und von Wasserdampf aus dem Kondensator (40), der ein Ringflüssigkeitsabscheider (64) nachgeschaltet ist.

30. Vorrichtung gemäß Anspruch 29,
dadurch gekennzeichnet,
daß der Ringflüssigkeitsbehälter (64) einen Sammelbehälter aufweist, dessen Mittelteil ein mit einer Kühlschlange (68) versehenes Bad für die abgeschiedenen Fremdstoffe , aus dem die Betriebsflüssigkeit für die Flüssigkeitsringpumpe entnommen wird, aufweist und dessen Unterteil einen Abscheidebehälter (66) für das abgeschiedene Wasser aufweist.

31. Vorrichtung gemäß Anspruch 30,
dadurch gekennzeichnet,
daß der Ringflüssigkeitsabscheider (64) zwei Überläufe aufweist, durch die die überschüssigen Fremdstoffe und das Wasser getrennt abgeführt und entsorgt werden können.

32. Vorrichtung gemaß einem der Ansprüche 19 bis 31,
dadurch gekennzeichnet,
daß vor dem Verdampfer (26) ein Durchlauferhitzer (22) angeordnet ist, der das verunreinigte Lösemittel vor dem Eintreten in den Verdampfer (26) erhitzt.

33. Vorrichtung gemäß einem der Ansprüche 19 bis 32,
gekennzeichnet durch einen vor dem Verdampfer (26) angeordneten Absetzbehälter (1) zur Grobreinigung des verunreinigten Lösemittels von sich absetzendem Wasser und sich absetzenden Fremdstoffen.

34. Vorrichtung gemäß Anspruch 33,
dadurch gekennzeichnet,
daß der Absetzbehälter (1) sich auf unterschiedlichen Höhen befindende Auslässe (10, 11) aufweist, die durch entsprechende , jeweils knapp unterhalb angeordnete Schwimmerschalter (3, 2) steuerbar sind.

35. Vorrichtung gemäß Anspruch 34,
dadurch gekennzeichnet,
daß die Schwimmerschalter (2, 3) in Wasser, aber nicht in Lösemittel aufschwimmen.

36. Vorrichtung gemäß Anspruch 35,
dadurch gekennzeichnet,
daß knapp oberhalb der beiden in Wasser aufschwimmenden Schwimmerschalter (2, 3) ein in Lösemittel aufschwimmender Schwimmerschalter (4) in dem Absetzbehälter (1) angeordnet ist.

37. Vorrichtung gemäß Anspruch 36,
dadurch gekennzeichnet,
daß am oberen Rand des Absetzbehälters (1) ein als Überfüllsicherung dienender, in Lösemittel aufschwimmender Schwimmerschalter (5) angeordnet ist.

38. Vorrichtung gemäß einem der Ansprüche 29 bis 37
dadurch gekennzeichnet,
daß der Ringflüssigkeitsabscheider (64) und der Verdampfer (26) über ein oder mehrere Sammelbehälter (80, 81, 82) zur Aufnahme der aus dem Kondensator (40) abgeführten dampfförmigen Fremdstoffe sowie von mitverdampftem Lösemittel verbunden sind, um diese zur Nachdestillation mindestens ein weiteres Mal durch den Verdampfer (26) in den Kondensator (40) zu führen.

## Claims

1. Process for regenerating a contaminated solvent with separation of contaminating foreign substances, in which foreign substances whose boiling point is above the boiling point of the pure solvent are separated in an evaporator (26) continuously in a first process step, and foreign substances whose boiling point is below the boiling point of the pure solvent are separated in a condenser (40) in a second process step, wherein pure solvent is condensed out in the condenser (40) and discharged and the foreign substances whose boiling point is below the boiling point of the pure solvent and optionally water are discharged from the condenser (40) in vaporous state, characterized in that the temperature of the vaporous foreign substances on leaving the condenser (40) and the temperature of the condensed pure solvent on leaving the condenser (40) are controlled as follows by means of a closed separate cooling circuit whose coolant flows through the condenser:
- the temperature of the coolant on entering the condenser (40) is controlled by means of a control device allocated to the coolant circuit, by which means the temperature of the vaporous foreign substances leaving on the same side of the condenser (40) is set;
- the temperature of the condensed pure solvent on leaving the condenser (40) is controlled by means of the flow quantity of the coolant of the cooling circuit flowing through the cooling pipes of the condenser.

2. Process according to Claim 1, characterized in that the temperature of the coolant on entering the condenser (40) is controlled via a control valve (59) arranged in a bypass to a cooler (58), which valve is controlled by the temperature of the vaporous foreign substances on leaving the condenser (40).

3. Process according to one of the preceding Claims, characterized in that the contaminated solvent is injected into the evaporator (26) in liquid form, wherein a part of the contaminated solvent and the foreign substances whose boiling point is below the boiling point of the pure solvent evaporate immediately, and the other part of the contaminated solvent and the foreign substances whose boiling point is above the boiling point of the pure solvent sink down into a solvent bath (29).

4. Process according to Claim 3, characterized in that the contaminated solvent is injected into the evaporator (26) into the chamber above the surface of the solvent bath (29).

5. Process according to Claim 3 or 4, characterized in that before being injected into the evaporator (26) the contaminated solvent is heated by a flow heater (22) to an injection temperature which is preferably between 10 °C and 20 °C above the evaporation temperature of the solvent at the internal pressure prevailing in the evaporator (26).

6. Process according to one of Claims 3 to 5, characterized in that the solvent bath is heated and is controlled for level control to a volume which corresponds to 5% to 20% of the hourly overall regeneration quantity of solvent.

7. Process according to one of Claims 3 to 6, characterized in that the solvent bath (29) is evaporated down to a non-evaporable residue for a time of 3 to 12 minutes by periodic interruption of the solvent injection into the evaporator (26), whereupon this residue is completely discharged from the evaporator (26).

8. Process according to Claim 7, characterized in that the residue is automatically discharged from the evaporator (26) by means of a time circuit.

9. Process according to one of the preceding Claims, characterized in that the pure solvent is removed from the condenser (40) by means of a sluice system.

10. Process according to Claim 9, characterized in that the pure solvent is pre-cooled by a cooler (44) connected upstream of the sluice system.

11. Process according to one of the preceding Claims, characterized in that the closed separate cooling circuit and the condenser (40) are brought to the desired operating temperature before and/or when the process begins by means of a start-up heating (76).

12. Process according to one of the preceding Claims, characterized in that the foreign substances whose boiling point is below that of the pure solvent, and optionally water vapour, are extracted from the condenser (40) via a liquid ring pump, downstream of which a ring liquid separator (64) is connected, wherein the pressure in the condenser (40) and in the evaporator (26) is controlled via the temperature of the ring liquid.

13. Process according to Claim 12, characterized in that the foreign substances drawn off from the condenser (40) and the water optionally drawn off from the condenser (40) are separated in the ring liquid separator (64), collected separately and removed separately so that the foreign substances serving as operating liquid of the liquid ring pump contain no water.

14. Process according to one of the preceding Claims, characterized in that before being supplied to the evaporator (26) the contaminated solvent is roughly purified of settling water and settling foreign substances in a settling tank (1).

15. Process according to Claim 14, characterized in that the roughly purified solvent is removed from the settling tank (1) via outlets (10, 11) which are located at different heights and are each controlled by float switches (2, 3) which are arranged just below them and rise in water.

16. Process according to Claim 15, characterized in that the outlet in question (10, 11) is closed when the corresponding float switch (3, 2) rises in water.

17. Process according to one of the preceding Claims, characterized in that the vaporous foreign substances and optionally co-evaporated solvent, which are discharged from the condenser( 40), are supplied to the evaporator (26) and to the condenser (40) at least one further time and are post-distilled in one or more post-distillation steps.

18. Process according to Claim 17, characterized in that no supply of new contaminated solvent to the evaporator (26) takes place during post-distillation and that the vaporous foreign substances, and the coevaporated solvent, are collected in a separate container (80, 81, 82) after each distillation step.

19. Device for regenerating a contaminated solvent with separation of contaminating foreign substances, with an evaporator (26) for separating foreign substances whose boiling point is above the boiling point of the pure solvent, and a condenser (40) arranged downstream of the evaporator (26) for separating foreign substances whose boiling point is below the boiling point of the pure solvent, wherein the condenser (40) has an inlet for the vapour coming from the evaporator (26) and an outlet for condensed pure solvent, and an outlet for the vaporous foreign substances whose boiling point is below the boiling point of the pure solvent, characterized in that the coolant of a closed separate cooling circuit flows through the condenser (40), that the closed cooling circuit has a control device (58, 59) for setting the temperature of the coolant on entering the condenser (40), which thus serves to set the temperature of the vaporous foreign substances when leaving the condenser (40) on the same side, and that the closed cooling circuit has a circulating pump (60) for controlling the flow quantity of the coolant in the condenser, which thus serves to set the temperature of the condensed pure solvent on leaving the condenser (40).

20. Device according to Claim 19, characterized in that the control device comprises a cooler (58) and a control valve (59), arranged in a bypass thereto, which is controlled by the temperature of the vaporous foreign substances on leaving the condenser.

21. Device according to one of Claims 19 to 20, characterized in that the evaporator (26) is in the form of a flash evaporator in the upper part and as a bubble evaporator with heated bottom in the lower part.

22. Device according to Claim 21, characterized in that the evaporator has a cylindrical form, wherein the injection of the solvent takes place into the upper part of the evaporator.

23. Device according to Claim 22, characterized in that the lower part of the evaporator has a solvent bath (29) whose volume is controllable to 5% to 20% of the hourly overall regeneration quantity of the solvent.

24. Device according to Claim 23, characterized in that a filter layer (A, B) is arranged in the evaporator (26) above the surface of the solvent bath (29).

25. Device according to Claim 24, characterized in that the filter layer (A, B) is arranged in the evaporator above the injection (30) of the solvent.

26. Device according to one of Claims 19 to 25, characterized in that the pure solvent can be removed from the condenser (40) via a sluice system (42).

27. Device according to Claim 26, characterized in that a cooler (44) for pre-cooling the pure solvent is connected upstream of the sluice system.

28. Device according to one of Claims 19 to 27, characterized in that the closed separate cooling circuit has a start-up heating (76) by means of which the condenser (40) may be brought to the desired operating temperature before and/or when the process begins.

29. Device according to one of Claims 19 to 28, characterized by a liquid pump for extracting the vaporous foreign substances and water vapour from the condenser (40), downstream of which a ring liquid separator (64) is connected.

30. Device according to Claim 29, characterized in that the ring liquid separator (64) has a collecting tank, the central part of which has a bath provided with a cooling coil (68) for the separated foreign substances from which the operating liquid for the liquid ring pump is taken, and the lower part of which has a separation tank (66) for the separated water.

31. Device according to Claim 30, characterized in that the ring liquid separator (64) has two overflows by means of which the surplus foreign substances and the water may be separately discharged and disposed of.

32. Device according to one of Claims 19 to 31, characterized in that a flow heater (22) which heats the contaminated solvent prior to entry into the evaporator (26) is arranged in front of the evaporator (26).

33. Device according to one of Claims 19 to 32, characterized by a settling tank (1) arranged in front of the evaporator (26) for the rough purification of the contaminated solvent of settling water and settling foreign substances.

34. Device according to Claim 33, characterized in that the settling tank (1) has outlets (10, 11) which are located at different heights and are controllable by corresponding float switches (3, 2) each arranged just underneath.

35. Device according to Claim 34, characterized in that the float switches (2, 3) rise in water but not in solvent.

36. Device according to Claim 35, characterized in that a float switch (4) rising in solvent is arranged in the settling tank (1) just above the two float switches (2, 3) rising in water.

37. Device according to Claim 36, characterized in that a float switch (5) rising in solvent and serving as overfill protection is arranged on the upper edge of the settling tank (1).

38. Device according to one of Claims 29 to 37, characterized in that the ring liquid separator (64) and the evaporator (26) are connected via one or more collecting tanks (80, 81, 82) to receive the vaporous foreign substances discharged from the condenser (40) and co-evaporated solvent, in order to guide these through the evaporator (26) into the condenser (40) at least one further time for post-distillation.

## Revendications

1. Procédé de retraitement d'un solvant pollué avec séparation de substances étrangères polluantes, dans lequel, dans une première étape de procédé, les substances étrangères dont le point d'ébullition est supérieur au point d'ébullition du solvant pur sont séparées en continu dans un vaporisateur (26) et, dans une seconde étape de procédé, les substances étrangères dont le point d'ébullition est inférieur au point d'ébullition du solvant pur sont séparées dans un condenseur (40), le solvant pur étant condensé dans le condenseur (40) et évacué, et les substances étrangères dont le point d'ébullition est situé sous le point d'ébullition du solvant pur, ainsi éventuellement que l'eau, sont évacuées du condenseur (40) à l'état gazeux, caractérisé en ce que la température des substances étrangères gazeuses à la sortie du condenseur (40) et la température du solvant pur condensé à la sortie du condenseur (40) sont régulées au moyen d'un circuit fermé de refroidissement séparé dont le réfrigérant traverse le condenseur, de la manière suivante :
- la température du réfrigérant à l'entrée du condenseur (40) est réglée au moyen d'un dispositif de réqulation associé au circuit de réfrigérant, de sorte que la température des substances étrangères gazeuses qui sortent du méme côté du condenseur (40) est ajustée ;
- la température du solvant pur condensé à la sortie du condenseur (40) est régulée au moyen du débit du réfrigérant du circuit de refroidissement qui s'écoule dans les tubes de refroidissement du condenseur.

2. Procédé selon la revendication 1, caractérisé en ce que la température du réfrigérant à l'entrée du condenseur (40) est régulée par l'intermédiaire d'une vanne de régulation (59) disposée dans une dérivation d'un refroidisseur (58), qui commande la température des substances étrangères gazeuses à la sortie du condenseur (40).

3. Procédé selon l'une des revendications précédentes, caractérisé en ce que le solvant pollué est injecté à l'état liquide dans le vaporisateur (26), une partie du solvant pollué et les substances étrangères dont le point d'ébullition est inférieur au point d'ébullition du solvant pur s'évaporant immédiatement, et l'autre partie du solvant pollué et les substances étrangères dont le point d'ébullition est supérieur au point d'ébullition du solvant pur tombant dans un bain de solvant (29).

4. Procédé selon la revendication 3 caractérisé en ce que le solvant pollué est injecté dans l'espace au-dessus de la surface du bain de solvant (29) dans le vaporisateur (26).

5. Procédé selon la revendication 3 ou 4, caractérisé en ce que le solvant souillé est chauffé avant l'injection dans le vaporisateur (26) par un réchauffeur continu (22) à une température d'injection qui est située de préférence 10 à 20°C au-dessus de la température de vaporisation du solvant à la pression interne régnant dans le vaporisateur (26).

6. Procédé selon l'une des revendications 3 à 5 caractérisé en ce que le bain de solvant est chauffé et régulé pour la commande du niveau à un volume qui correspond à 5 à 20 % de la quantité totale horaire de solvant retraité.

7. Procédé selon l'une des revendications 3 à 6, caractérisé en ce que le bain de solvant (29) est vaporisé par interruption périodique de l'injection de solvant dans le vaporisateur (26) pendant une durée de 3 à 12 min jusqu'à un résidu non vaporisable, après quoi ce résidu est totalement extrait du vaporisateur (26).

8. Procédé selon la revendication 7, caractérisé en ce que le résidu provenant du vaporisateur (26) est extrait automatiquement au moyen d'une minuterie.

9. Procédé selon l'une des revendications précédentes, caractérisé en ce que le solvant pur est prélevé dans le condenseur (40) au moyen d'un système de sas.

10. Procédé selon la revendication 9, caractérisé en ce que le solvant pur est prérefroidi par un refroidisseur (44) situé en amont du système de sas.

11. Procédé selon l'une des revendications précédentes, caractérisé en ce que le circuit fermé de refroidissement séparé ainsi que le condenseur (40) sont portés à la température de fonctionnement voulue avant ou au début du procédé, par un dispositif chauffant de démarrage (76).

12. Procédé selon l'une des revendications précédentes, caractérisé en ce que les substances étrangères dont le point d'ébullition est inférieur à celui du solvant pur, ainsi éventuellement que la vapeur d'eau, sont évacuées du condenseur (40) par une pompe à anneau de liquide à laquelle fait suite un séparateur de liquide d'anneau (64), la pression dans le condenseur (40) et dans le vaporisateur (26) étant commandée par la température du liquide d'anneau.

13. Procédé selon la revendication 12, caractérisé en ce que les substances étrangères extraites du condenseur (40) et l'eau éventuellement extraite du condenseur (40) sont séparées dans le séparateur de liquide d'anneau (64), sont rassemblées séparément et sont prélevées séparément, de sorte que les substances étrangères qui servent de liquide de service de la pompe à anneau de liquide ne contiennent pas d'eau.

14. Procédé selon l'une des revendications précédentes, caractérisé en ce que le solvant pollué est débarrassé grossièrement de l'eau qui se décante et des substances étrangères qui se déposent dans un récipient de décantation (1) avant l'introduction dans le vaporisateur (26).

15. Procédé selon la revendication 14, caractérisé en ce que le solvant purifié grossièrement est prélevé dans le réservoir de décantation (1) par des sorties (10, 11) situées à des hauteurs différentes, qui sont commandées chacune par des interrupteurs à flotteur (2, 3) disposés à peu de distance sous celles-ci et flottant dans l'eau.

16. Procédé selon la revendication 15, caractérisé en ce que la sortie individuelle (10, 11) est fermée lorsque l'interrupteur à flotteur (3, 2) correspondant flotte dans l'eau.

17. Procédé selon l'une des revendications précédentes, caractérisé en ce que les substances étrangères gazeuses ainsi que le solvant éventuellement vaporisé en même temps, qui sont évacués du condenseur (40), sont envoyés au moins une fois supplémentaire dans le vaporisateur (26) et le condenseur (40) et sont post-distillés dans une ou plusieurs étapes de post-distillation.

18. Procédé selon la revendication 17, caractérisé en ce que, pendant la post-distillation, il ne se produit aucun apport de nouveau solvant pollué dans le vaporisateur (26), et que les substances étrangères gazeuses ainsi que le solvant vaporisé en même temps sont rassemblés après chaque étape de distillation dans un récipient séparé (80, 81, 82).

19. Dispositif de retraitement d'un solvant pollué avec séparation de substances étrangères polluantes, avec un vaporisateur. (26) pour la séparation des substances étrangères dont le point d'ébullition est supérieur au point d'ébullition du solvant pur, et un condenseur (40) situé en aval du vaporisateur (26) pour la séparation des substances étrangères dont le point d'ébullition est inférieur au point d'ébullition du solvant pur, le condenseur (40) comportant une entrée pour la vapeur venant du vaporisateur (26) et une sortie pour le solvant pur condensé ainsi qu'une sortie pour les substances étrangères gazeuses dont le point d'ébullition est inférieur au point d'ébullition du solvant pur, caractérisé en ce que le condenseur (40) est traversé par le réfrigérant d'un circuit fermé de refroidissement séparé, en ce que le circuit fermé de refroidissement comporte un dispositif de régulation (58, 59) pour le réglage de la température du réfrigérant à l'entrée dans le condenseur (40), qui sert ainsi à réguler la température des substances étrangères gazeuses lors de la sortie simultanée du condenseur (40), et en ce que le circuit fermé de refroidissement comporte une pompe de circulation (60) pour réguler le débit du réfrigérant dans le condenseur qui sert ainsi à régler la température du solvant pur condensé à la sortie du condenseur (40).

20. Dispositif selon la revendication 19, caractérisé en ce que le dispositif de régulation consiste en un refroidisseur (58) et en une vanne de régulation (59) disposée dans une dérivation de celui-ci, qui est régulée par la température des substances étrangères gazeuses à la sortie du condenseur.

21. Dispositif selon l'une des revendications 19 à 20, caractérisé en ce que le vaporisateur (26) est sous forme de vaporisateur à détente dans la partie supérieure et sous forme de vaporisateur à alambic à fond chauffé à la partie inférieure.

22. Dispositif selon la revendication 21, caractérisé en ce que le vaporisateur a une forme cylindrique, l'injection du solvant ayant lieu dans la partie supérieure du vaporisateur.

23. Dispositif selon la revendication 22, caractérisé en ce que la partie inférieure du vaporisateur comporte un bain de solvant (29) dont le volume est réglable à 5 à 20 % de la quantité totale horaire de solvant retraité.

24. Dispositif selon la revendication 23, caractérisé en ce qu'une couche de filtre (A, B) est disposée dans le vaporisateur (26) au-dessus de la surface du bain de solvant (29).

25. Dispositif selon la revendication 24, caractérisé en ce que la couche de filtre (A, B) est disposée au-dessus de l'injection (30) du solvant dans le vaporisateur.

26. Dispositif selon l'une des revendications 19 à 25, caractérisé en ce que le solvant pur peut être prélevé dans le condenseur (40) par l'intermédiaire d'un système de sas (42).

27. Dispositif selon la revendication 26, caractérisé en ce qu'un refroidisseur (44) pour prérefroidir le solvant pur est disposé en amont du système de sas.

28. Dispositif selon l'une des revendications 19 à 27, caractérisé en ce que le circuit fermé de refroidissement séparé comporte un dispositif de chauffage de démarrage (76) par lequel le condenseur (40) peut être porté à la température de fonctionnement voulue avant ou au début du procédé.

29. Dispositif selon l'une des revendications 19 à 28, caractérisé par une pompe à liquide pour aspirer les substances étrangères gazeuses et la vapeur d'eau du condenseur (40), à laquelle fait suite un séparateur de liquide d'anneau (64).

30. Dispositif selon la revendication 29, caractérisé en ce que le récipient de liquide d'anneau (64) comporte un réservoir dont la partie moyenne comporte un bain muni d'un serpentin de refroidissement (68) pour les substances étrangères séparées duquel est prélevé le liquide de service pour la pompe à anneau de liquide et dont la partie inférieure comporte un réservoir de séparation (66) pour l'eau séparée.

31. Dispositif selon la revendication 30, caractérisé en ce que le séparateur de liquide d'anneau (64) comporte deux trop-pleins par lesquels les substances étrangères en excès et l'eau peuvent être évacuées et éliminées séparément.

32. Dispositif selon l'une des revendications 19 à 31, caractérisé en ce qu'un réchauffeur continu (22) qui chauffe le solvant pollué avant l'entrée dans le vaporisateur (26) est disposé devant le vaporisateur (26).

33. Dispositif selon l'une des revendications 19 à 32, caractérisé par un récipient de décantation (1) disposé devant le vaporisateur (26) pour l'épuration grossière du solvant pollué concernant l'eau qui se décante et les substances étrangères qui se décantent.

34. Dispositif selon la revendication 33, caractérisé en ce que le récipient de décantation (1) comporte des sorties (10, 11) situées à des hauteurs différentes qui peuvent être commandées par des interrupteurs à flotteur (3, 2) correspondants, disposés chacun à peu de distance en dessous.

35. Dispositif selon la revendication 34, caractérisé en ce que les interrupteurs à flotteur (2, 3) flottent dans l'eau mais pas dans le solvant.

36. Dispositif selon la revendication 35, caractérisé en ce qu'un interrupteur à flotteur (4) qui flotte dans le solvant est disposé dans le récipient de décantation (1) à peu de distance au-dessus des deux interrupteurs à flotteur (2, 3) qui flottent dans l'eau.

37. Dispositif selon la revendication 36, caractérisé en ce qu'un interrupteur à flotteur (5) qui flotte dans le solvant et qui sert de sécurité de trop-plein est disposé au niveau du bord supérieur du récipient de décantation (1).

38. Dispositif selon l'une des revendications 29 à 37, caractérisé en ce que le séparateur de liquide d'anneau (64) et le vaporisateur (26) sont reliés par l'intermédiaire d'un ou plusieurs récipients collecteurs (80, 81, 82) pour recevoir les substances étrangères gazeuses évacuées du condenseur (40) et le solvant vaporisé en même temps, pour conduire ceux-ci au moins une fois encore par le vaporisateur (26) dans le condenseur (40) pour la post-distillation.
